# EUROPEAN PATENT SPECIFICATION

(11) **EP 3 282 834 B1**
(45) Date of publication and mention of the grant of the patent: **05.06.2019**
(21) Application number: 16726161.9
(22) Date of filing: 14.04.2016
(51) Int. Cl.: A01K 63/04

(54) **AUTOMATIC APPARATUS AND METHOD FOR CULTURES OF ORGANISMS IN AN AQUATIC ENVIRONMENT**
AUTOMATISCHE VORRICHTUNG UND VERFAHREN ZUR KULTIVIERUNG VON ORGANISMEN IN EINER WÄSSRIGEN UMGEBUNG
APPAREIL AUTOMATIQUE ET PROCÉDÉ POUR CULTURES D'ORGANISMES DANS UN ENVIRONNEMENT AQUATIQUE

(30) Priority: 16.04.2015 IT UB20150536
(43) Date of publication of application: 21.02.2018
(73) Proprietor: Stazione Zoologica "Anton Dohrn", 80121 Napoli (IT)
(72) Inventor: ZUPO, Valerio, 80121 Napoli (IT); MUTALIPASSI, Mirko, 80121 Napoli (IT)
(74) Representative: Capasso, Olga
(86) International application number: PCT/IB2016/052128
(87) International publication number: WO 2016/166696

(56) References cited:
- WO-A1-2010/049957
- WO-A1-2015/031939
- US-A1- 2004 074 840
- US-A1- 2004 237 902
- US-A1- 2010 269 761
- US-B1- 6 499 431
- US-B1- 8 651 058

## Description

### TECHNICAL FIELD

The present invention relates to an automatic apparatus for growing cultures of organisms in an aquatic environment. In particular, it relates to an automatic computerised apparatus for rearing aquatic invertebrates. Furthermore, the present invention relates to a corresponding process for growing cultures of organisms in an aquatic environment.

### PRIOR ART

Scientific research is making increasingly frequent use of aquatic organisms, which in many cases have demonstrated to be excellent models for studying particular biological or ecological phenomena and even replacements for small mammals in biomedical research, in relation to well-defined cellular or tissue processes.

In order to survive in captivity and, above all, to be able to live and reproduce without stress, every marine or freshwater species requires specific ecological conditions. These can be obtained in a laboratory by setting up *ad hoc* systems, which have, however, a relatively high cost and limited usefulness over time due to the persistence of the specific experimental procedures. Furthermore, not all research centres are capable of producing efficient technologies for this purpose, so that time and resources are wasted as a consequence.

Various types of systems for specific needs are known from the literature. United States patent application US 2006/0169216 A1 discloses, for example, a system for intensive controlled copepod production for the growth of fish larvae. Specifically, the system comprises separate rearing tanks in which the copepods and larvae are reared in parallel. On the basis of given growth conditions, the copepods are transferred from one tank to another and used as feed for the larvae.

European patent EP 1 743 520 B1 instead discloses a system for rearing aquatic laboratory animals in which the structure of the tank is such as to optimise the collection of organic residues produced by the fishes and facilitate the function of detaching and reattaching in the event of cleaning of the tank or replacement of the tank with another one of a different size.

With the aim of automating the rearing procedures, some documents such as JPH0654678A or WO 2001/036517 A1 further disclose computerised systems used to supply feed automatically to the microorganisms or regulate parameters such as temperature, light, etc..

United States Patent US 6,499,431 B1 discloses an indoor aquaculture system that is capable of automatically monitoring water quality, replenishing breeding water and dispensing feeds, which includes a set of breeding pond, a recirculating water treatment system, a plurality of feed dispensing apparatus, an external system and an automatic monitor and control system.

Although the documents cited above show improvements from a structural and functional point of view as regards rearing organisms in an aquatic environment, the use thereof is however strictly limited to the type of specific culture concerned. The use of the same systems for cultures of organisms of a different nature would entail considerable modifications from a constructive and methodological standpoint and in many cases they would be difficult to apply. Furthermore, the systems known from the literature are always limited to a single culture at a time.

It is an object of the present invention, therefore, to overcome the above-mentioned limitations of the known systems for the culture of organisms and to provide an apparatus that may be plastically adapted to various types of culture and a process that is adaptable to the user's needs, and more efficient and functional for many different species.

### DESCRIPTION OF THE INVENTION

These objects are achieved by an apparatus and a process for growing at least one culture of organisms in an aquatic environment according to the independent claims.

The apparatus according to the present invention comprises at least one storage and gravimetric settling tank for continuously collecting not treated water, at least one filtering tank connected to the storage tank and suitable for receiving water from the storage tank for the treatment thereof so as to obtain a culture medium and at least one rearing tank, connected to the filtering tank and comprising at least one container for rearing the culture, said rearing tank and said container being suitable for receiving the culture medium from the filtering tank. Furthermore, the apparatus comprises at least one control and management system for governing the environmental conditions of the culture and automatically varying the culture medium in response to changes in said environmental growth conditions.

In particular, the rearing container comprises at least a first porous partition for passive ion exchanges of the culture medium between the inside and the outside of the container, said passive ion exchanges being obtained by diffusion, and at least a second porous partition for active exchanges of the culture medium between the inside and the outside of the container, said active exchanges being obtained by generating a pressure variation between the inside and the outside of the rearing container.

This apparatus is economical to construct and effective in its operation.

According to the present invention, the culture can be grown automatically. In other words, the entire process of growth or development of the culture of organisms can be controlled and managed automatically. The expression "automatically varying the culture medium" means that all of the environmental conditions influencing the phases of the culture cycle and hence the adjustment of vital parameters such as the physiochemical properties of the water, the correct lighting and the correct temperature, the administration of feed or, for example, the programming of transfers and changes of water in the various tanks of the apparatus (by opening and closing the partitions between the tanks or the activation of pumps for the transfer of water), can be controlled and thus varied and managed in the total absence of an operator. In this context, it is therefore conceivable to prepare the initial conditions for the development of a given culture to be reared, set a dedicated management program for said culture and allow the culture to develop in complete autonomy for the whole amount of time required, which can range from a few days to several weeks, depending on the species being reared. The operator will only intervene when the process is over, to collect the final product at the end of the development of the cultured organisms.

In fact, following the introduction of the organisms to be reared, for example larvae, the apparatus according to the present invention does not require any maintenance and at the end of the period of growth or development of the culture (about 20 days in the case of larval development of many natant decapods) provides the product, i.e. perfectly formed post-larvae, with automatic changes of water, addition of feed (live or dry) and sterilisation of the culture medium. In the case of the development of crustaceans like *Artemia salina,* via the present apparatus it is possible to cultivate phytoplankton and nauplii in the complete absence of an operator, providing adult individuals after about two weeks. The invention demonstrates to be efficient, guaranteeing excellent levels of survival without the operator's intervention, also in the case of many benthic invertebrates.

Therefore, the culture is grown in a wholly automatic manner, without the intervention of an operator.

More specifically, the porous partitions place the inside of the container in communication with the rearing tank and serve to remove pollutants. The presence of at least one first porous partition for passive ion exchanges and a second porous partition for active exchanges enables a specific programming of the apparatus according to the culture of organisms to be grown. In this manner, the apparatus can be programmable so as to obtain cultures of aquatic organisms having specific and complex procedural requirements. In particular, the computerised apparatus is programmable (as if it were an automaton) for rearing aquatic invertebrates in small volumes of water according to specific needs.

The term "passive ion exchanges" means all the exchanges between the inside and the outside of the container that are of a diffusive type, i.e. that require the aid of external systems, such as, for example, pumping systems. In other words, the exchange takes place solely by diffusion, without generating pressure or vacuums in the container. The term "active exchanges", on the other hand, means all the exchanges between the inside and the outside of the container which require the use of external systems such as centrifugal pumps or other mechanical aids that produce differences in level or pressures in the culture containers.

The storage tank and the filtering and rearing tanks, are preferably made of glass. However, other nontoxic materials can be used, such as fibreglass, plastic, or the like.

The tanks can have varying shapes and sizes. Preferably, the tanks all have a parallelepiped shape and are of an identical size (40 x 50 x 50 cm).

It is worth noting that the tanks are in fluid communication with one another, that is, they are connected to one another by means of conveyance elements, such as pipes or the like, for transferring water from one tank to another. Advantageously, the pipes are connected to pumps which are managed independently of one another through the control and management system.

In order to optimise spaces, the tanks can be arranged contiguously, one after another, so as to have a wall or a side in contact between them. Alternatively, the tanks can also be arranged at a certain distance from one another, on condition that the water conveyance elements, for example the pipes, have a length such as to ensure the transfer of water from one tank to another.

Preferably, the tanks are arranged contiguously in a line, in which the storage tank is positioned near the filtering tank and the filtering tank is in a position between the storage tank and the rearing tank. This arrangement can also be modified, for example by placing the rearing tank between the storage tank and the filtering tank, on condition, however, that the water conveyance elements ensure the transfer of water from the storage tank to the filtering tank and from the latter to the rearing tank.

The term "not treated water", with reference to the storage tank, means that this tank continually collects untreated water, coming from a tap or a continuous source of water (a spring, a lake, a river, the sea, etc..). In order to prevent the tank from spilling over, the storage tank can be provided with an overflow drain, i.e. an accessory drainage opening set at a certain distance from the bottom and from the edge of the tank. Alternatively, the tank can be provided with a solenoid valve, preferably made of plastic material, to stop water from entering once a given level is reached.

The filtering tank essentially serves to treat the water contained therein, modifying the physicochemical characteristics thereof in such a way as to obtain a culture medium suitable for the development of the organisms to be reared. According to the type of culture, therefore, the treatment of the water will be different.

The rearing tank receives the treated water, i.e. the culture medium, from the filtering tank and ensures an ideal environment for all stages of development of the culture inside the rearing container.

The container present inside the rearing tank can be made of glass, plastic (for example PVC) or any other nontoxic material, preferably transparent. The capacity of an individual container is comprised between 1 and 10 gross litres, preferably between 3 and 5 gross litres. It is in fluid communication with the rearing tank, i.e. it permits an exchange of culture medium (but not of the reared organisms) between its own interior and the tank. Finally, the container comprises a compartment placed on the bottom for collecting the production upon the conclusion of the rearing process.

The container can have any suitable shape for rearing the culture according to the present invention. In particular, the shape can be such as to favour the introduction and extraction of the container from the rearing tank. More specifically, the container can have an elongated shape, for example a truncated cone shape. In the latter case, the container can take on the name "culture cylinder".

The rearing tank communicates with the outside of the apparatus via a system of pumps and pipes for draining out the water during changes of the culture medium.

In one embodiment of the invention, the storage tank, the filtering tank and the rearing tank make up a modular system of tanks suitable for varying the number and the arrangement of the tanks connected to one another. In other words, according to need, the apparatus can be modified simply by varying the number and/or the arrangement of the tanks of the same type (and/or of a different type). For example, in order to obtain higher yields of the culture, it is conceivable to increase the number of the rearing tanks in such a way as to be able to manage the development of several cultures in parallel. However, in order to ensure a correct intake of culture medium, for each pair (or multiple) of rearing tanks it is necessary to add a filtering tank. The present apparatus also enables cultures of living organisms to be managed simultaneously in different water (for example in freshwater and seawater simultaneously). In this case, for every water condition (freshwater or saltwater) a pair of storage and filtering tanks will be necessary in order to prepare the culture medium in a suitable aquatic environment. Therefore, the apparatus according to the present invention, unlike the systems known from the literature, allows considerable flexibility in terms of the configuration of the tanks and consequently the yield of the cultures. In fact, to increase the yield, the apparatus can be modified simply by adding one or more rearing tanks. Similarly, to cut back the yield, the apparatus can again be modified - at a later time - by removing one or more rearing tanks.

Advantageously, to offer compactness and stability on one hand and flexibility of configuration on the other, every tank can comprise an engagement and disengagement device for connecting two tanks together and to permit a configuration of the tanks that can be varied according to need, as described previously. The engagement and disengagement device can consist of a grid-like structure onto which the bottoms of the tanks can be fitted according to a specific configuration for the arrangement thereof.

The possibility of combining the tanks according to a specific configuration offers the further advantage of being able to arrange them on a surface in such a way as to optimise space. Depending on the available space, the tanks can be arranged in a line or grouped together to form a square, rectangular or circular structure or one in any other conceivable shape. In addition, this modularity of the tanks can potentially reduce the consumption of the elements of the control and management system. In fact, by suitably arranging the tanks, it is conceivable, for example, to use a same pump or a same lamp to cover two contiguous tanks. These elements can function simultaneously for both tanks or else they can be programmed according to plans for diversifying their operation from tank to tank.

In order to further modulate the yield of the culture, the rearing tank can comprise a plurality of rearing containers. For example, the rearing tank can contain two, three or even four containers for rearing two, three or four groups of organisms simultaneously in the same tank. With a plurality of containers it is possible to rear several groups of organisms simultaneously (possibly also of different species), on condition that they share the same culture requirements and procedures. In reality, with the addition of hardware ports in the control and management system, the apparatus according to the present invention can be used to manage groups of cultures simultaneously using diversified logics and environmental conditions.

For example, by combining two rearing tanks, each containing three rearing containers, with a filtering tank and a storage tank it is possible, via the control and management system of the apparatus according to the present invention, to control and manage the development of six cultures of living organisms simultaneously. It is evident at this point that the present apparatus has an enormous advantage over the ones known from the literature, which are in contrast limited to the management of a single culture at a time.

Advantageously, the containers comprise a means for rapidly engaging to and disengaging from the rearing tank. In this manner, it is possible to quickly add containers inside the rearing tank in order to grow several cultures in the same tank or else remove them if they are not being used. Furthermore, the possibility of detaching the containers from the rearing tank can prove extremely useful for the purpose of cleaning the containers and collecting the product, i.e. the mature culture, at the end of the production cycle.

In one embodiment of the invention, the first porous partition of the rearing container for passive ion exchanges is positioned on a lateral surface of the rearing container. The second porous partition is positioned on a surface located on the bottom, or at the base, of the rearing container. In order to facilitate the changes of water in the rearing container, the mesh size (diameter of the holes) of the second porous partition, for example placed on the bottom or at the base, is wider (the diameter of the holes is larger) than the mesh size of the first porous partition, for example placed on the lateral surface. According to the needs of different species, the partitions can be replaced by plankton nets with different mesh sizes. In one embodiment, the second porous partition, for example placed at the base, is connected to the container by means of a screw eye or a similar fastening element and has a mesh size of about 100 µm, whilst the first porous partition, for example placed on the lateral surface and consisting of a plankton net, has a mesh size of about 60 µm.

According to one embodiment of the invention, the lateral surface has a substantially vertical orientation relative to a base surface of the rearing tank and the surface located on the bottom has a substantially horizontal orientation relative to said base surface.

In other words, the first porous partition for diffusive passive exchanges is preferably oriented vertically relative to the bottom base of the rearing tank. The second porous partition for active exchanges is instead preferably oriented horizontally relative to said bottom base of the rearing tank.

In a preferred embodiment of the invention, the second porous partition is closed off by an air bubble. The latter prevents exchanges of any type unless subjected to a high hydrostatic pressure. The air bubble is produced by a porous stone placed in proximity to the partition. If the second porous partition is placed on the bottom of the container, the porous stone will be placed at the base of the culture container or cylinder inside a narrower cylinder.

According to one embodiment of the invention, the rearing container comprises, in the upper part thereof, a ring-shaped element for permitting water to drip along the walls of the container. In particular, this element acts as a lid for the container and regulates the flow for every container by means of a centrifugal feed pump. More specifically, the pump pushes the culture liquid into the ring. The fluid comes out of the holes at the base of the ring and flows along the vertical walls of the cylinder. The centrifugal pump connected to the edge of the ring pushes the water and a flow regulating valve placed between the pump and ring enables the flow to be adjusted according to need. The operation of the pump (hence the times at which it is running) is subject to control by the control and management system. The use of the ring-shaped drip element enables the water to be managed under different conditions of use and also adapted, therefore, to a very delicate sort of structure. The ring-shaped element (made of plastic, glass, PVC or the like) is open at the centre so as to favour gas exchanges and supports a central plastic bar. Positioned at the centre of every container there is a porous stone connected to an aerator which hangs from the bar of the lid and extends to the bottom of the base cone.

In one embodiment of the invention, the control and management system comprises sensing devices and management devices connected to each of the tanks and at least one computing and programming unit connected to the individual sensing devices and to the individual management devices so as to automatically adapt the environmental conditions of growth of the culture to the type and, consequently, to the specific needs of the culture to be grown.

The sensing devices comprise probes and sensors of various types, such as level sensors or floats for determining the water level inside the tanks (these floats can be present in all or only some of the tanks), thermal sensors for measuring the water temperature, pH sensors for measuring the acidity of the medium, ORP sensors for measuring the redox coefficient, sensors for measuring the concentration of ammonia/ammonium and conductometric probes for measuring the conductivity of the water (in the case of water softening systems). The sensing devices can furthermore comprise sensors for measuring light, the turbidity of the water, fluorescence (to monitor the status of phytoplankton cultures), oxygen and various nutrients and pollutants.

The management devices, on the other hand, comprise aeration systems using air pumps, pumping systems for changes of water, internal circulation and control of the porous partitions, filters for physicochemical treatment of the water, neon or LED lighting systems, thermoregulators for heating or cooling the water, contact column skimmers and protein skimmers, water softening systems using reverse osmosis or ion exchange resins (if freshwater is used), water sterilisation systems using ozone, systems for regulating pH with carbon dioxide and automatic feed dispensers positioned on every rearing container. The management devices can also comprise systems for the production of live feed (for example nauplii of Artemia Salina, Brachionus, etc.) capable of administering the microorganisms of the cultures at regular intervals of time.

The computing and programming unit comprises a programmable management computer connected on one side to the management devices and on the other side to the control devices, which continuously provide information about the status of the system. This computing unit is capable of perceiving environmental signals and operating on the management devices in such a way as to bring the development of the culture to an end automatically according to a pre-established operating program. For example, it is capable of timing the lighting on the tanks based on the vital needs of the culture. Similarly, it is capable of evaluating when the culture medium is ready and can thus be transferred from the filtering tank to the rearing tank and to the respective rearing containers, adjusting the distribution of feed based on the stage of growth or development of the culture, and adjusting the transfer of water based on the level sensor readings, etc.. For example, the level sensors will automatically block the process via a programmed software application in the event that the water in the storage tank or in the filtering tank has not reached a given level. They further indicate to the control and management system, i.e. the computing and programming unit, when water has been removed, imposing a replenishment thereof to the proper level conditions.

In addition, the computing and programming unit, if duly programmed, is capable of adapting the culture conditions to very specific needs presented by different species, lending a considerable functional flexibility to the apparatus according to the present invention.

More specifically, the ability of the control and management system and hence of the computing and programming unit to adapt the environmental conditions of growth or development of the culture to the type of culture to be reared is to be understood as the possibility of modifying some phases of the management process in order to optimise and ensure an adequate development of the culture. One example among many is represented by the method of changing the culture medium in the containers, which can be selected (via the control and management system) from among various specific methods for different cultures. Therefore, if a very delicate species is involved, the selected method of changing the medium will be such as to preserve the physical integrity of the culture (avoiding excessive turbulence which could harm the reared organisms) even if this means lengthening the duration of the change. If, on the other hand, the species is more resistant from a mechanical point of view, or is characterised by larger sizes, a method will be selected whereby the flow of the medium is greater so as to reduce the total duration of the change. Similarly, it is possible to regulate the flow by acting on the drip ring and adjusting the mesh size of the porous partitions based on the size of the cultured organisms.

Essentially, by programming the control and management system, the present invention is thus adaptable to different vital cycles, so much so that it can be used, for example, both for the culture of larval stages, and for rearing adults of vagile species. More specifically, the apparatus and the process disclosed herein can also be adapted to different types of laboratories and be used, for example, for the production of adult specimens of *Artemia salina* in small quantities in order to satisfy a momentary need of a hatchery, or for the production of fish larvae in a small aquaculture facility, being able to totally automate the programmed operations.

In particular, according to the present invention, it is possible to completely control the environmental conditions and the systems for managing the culture medium, thus resulting in a management of rearing that is highly elastic and at the same time precise in the definition of operating conditions, in order to be perfectly adaptable to any aquatic species. The present invention can be efficiently applied both for rearing highly sensitive marine species, such as, for example, larvae of natant decapods, which require very complex rearing management conditions, and for maintaining adults of vagile species, such as, for example, polychaetes, crustaceans and benthic molluscs.

Unlike the systems known from the literature, the apparatus according to the present invention thus ensures a flexible control and management of the culture, since it is adaptable for rearing cultures that are extremely different from one another and require diversified growth or development environments.

In one embodiment of the invention, the control and management system comprises a thermoregulation system for each of the tanks. This system can regulate the temperature with a 0.5 °C deviation in the cooling mode and a 0.3°C deviation in the heating mode, with a thermal interval of between 2°C and 30°C.

In a further embodiment of the invention, the control and management system comprises a lighting system for the filtering tank and rearing tank. The lighting systems for the two tanks can be separately programmed by means of an independent timer or else via a connection with the computing and programming unit.

In a further embodiment of the invention, the control and management system comprises a pumping system for changing the culture medium inside the rearing container. More specifically, a centrifugal pump with an intake positioned contiguously to the second porous partition, for example placed at the base of the container, produces a suction of the air bubble present, thereby causing the second porous partition to open, thus permitting the expulsion of organic deposits during changes of the water. The air bubble is restored when the aerator is switched on at the end of the change. This combination of porous partitions and a pumping system for changing the water in the rearing containers offers the advantage of avoiding the use of electromagnetic valves, which could show signs of failure due to the presence of seawater and could create mechanical damage in the presence of small reared plankton organisms.

The process for growing at least one culture of organisms in an aquatic environment according to the present invention comprises the actions of, according to claim 11, continuously supplying at least one storage tank with not treated water, connecting at least one filtering tank to the storage tank in such a way that the filtering tank receives the water from the storage tank and preparing a culture medium inside the filtering tank by treating the water. The process further comprises the action of connecting at least one rearing tank comprising at least one container for rearing the culture to the filtering tank in such a way that the rearing tank and the container receive the culture medium from the filtering tank. In addition, the process according to the present invention comprises the action of controlling the environmental conditions of growth of the culture and automatically varying the culture medium in response to variations in said environmental growth conditions via an electronic control and management system.

According to the invention, the process comprises the action of periodically and automatically changing the culture medium inside the rearing container by using at least a first porous partition for passive ion exchanges in the culture medium between the inside and the outside of the container, said passive ion exchanges being obtained by diffusion, and at least a second porous partition for active exchanges of the culture medium, said active exchanges being obtained by generating a pressure variation between the inside and the outside of the rearing container, wherein the action of periodically and automatically changing the culture medium is adaptable to the type of the culture to be reared.

According to the present process, the water (seawater or freshwater) arrives from a source of water, for example a tap, into the storage tank. As previously described, it is possible to use an overflow drain for supplying the tank continuously or else make use of a solenoid valve to stop water from entering when a level indicator associated with said tank indicates to the control and management system that the storage tank has been completely filled.

The periodic change of the culture medium can take place through the use of a pumping system associated with the porous partitions. On the basis of the set programs, the pumping system permits the inflow of water without changes in the levels in the containers (which avoids mechanical stress on the reared organisms) or with changes in the level (to maximise the expulsion of debris that has accumulated on the bottom of the container) and in concomitance with the opening and closing of air valves, which makes it possible to obtain movements of the water through the second porous partition, placed, for example, on the bottom, or only through the first porous partition, placed, for example, on the lateral surface.

According to a transfer plan that can be programmed via the control and management unit and the action of a pumping system, the water is transferred into the filtering tank in order to be treated. In the case of freshwater systems, it is possible to program a partial transfer performed by means of a reverse osmosis softener, controlled by probes and managed via a solenoid valve. The culture medium that will then be used for periodical changes of water inside the rearing tank is prepared in this filtering tank. In this phase, the water can be ozonized, filtered by means of mechanical-adsorbent substrates, and possibly have nutrients, feed or disinfectants added to it. In the case of freshwater, a system of ion exchange resins can manage the physicochemical characteristics (total hardness and pH) in this tank and in this case the water in the rearing tank will be changed only when specific sensors indicate to the control and management system that the medium in the filtering tank is identical, from a physicochemical point of view, to that in the rearing tank. A thermoregulation also takes place in the filtering tank to ensure a perfect conformity of the temperature of the water entering the rearing tank at the time of the change. In this case as well, specific probes can measure the temperature difference between the tanks and communicate these data to the system computer so as to permit the changes only in the absence of differences. In the case of saltwater, the filtering and rearing tanks contain a protein skimmer activated by the control and management system at different times according to the set program and used to remove organic substances and thus eliminate pollutants (in the rearing tank), or to eliminate pollutants and as a contact column for the distribution of ozone (in the filtering tank).

For the purpose of changing the water in the rearing containers, the control and management system can operate in various ways according to the set program of the pumps. The replacement water can be pumped directly into the containers, whilst an adjacent system, regulated by float level sensors, extracts liquid from the tank. Alternatively, the rearing tank can be partially emptied and then subsequently filled. More specifically, the changes are carried out by means of centrifugal pumps which can operate both on the medium present in the outer tank (i.e. rearing tank), so as to partially empty the container, and on the medium present in the container itself, by means of a "dropwise" process which makes the water in the outer tank flow back into the culture container. This operational flexibility ensures compliance with the vital conditions of highly delicate organisms, which could be harmed by a sudden flow through the porous exchange partitions. When the change is completed, not treated water can be pumped into the filtering tank and ozonized for a variable period of time, then aerated to eliminate the sterilising gas before being further treated (for example with the addition of nutrients). In order to ensure the quality of the culture medium in the filtering and rearing tanks, mechanical-adsorbent filters can be used. For example, filters loaded with perlon wool and granular activated carbon can be used. In order to ensure the right nutritional intake for the farmed species, dispensers of live, wet or dry feed can be used.

In the case of freshwater systems (or experimental marine systems, if necessary), a total control of pH can be achieved in the filtering and rearing tanks by means of a carbon dioxide diffusion system regulated by a pH probe and an electromechanical valve.

In the case of species requiring phytoplankton, the lighting system managed by the control and management system will ensure the proliferation of the vegetable food source. It is possible to add inorganic nutrients in the filtering tank by means of a peristaltic pump.

As explained in detail for the apparatus, the management process according to the present invention ensures an automatic control and management of the development of the culture of organisms to be reared. Via the control and management system, it is possible to monitor all stages of development of the cultures and manage them autonomously from the start to the finish without the intervention of an operator.

The intervention of an operator will however be indispensable for collecting the product, partially emptying the rearing containers and unscrewing the ring that connects the second partition, in which the product itself is collected, replacing the filter materials in the external filters, verifying the status of the thermoregulation and pumping system, replacing the ion exchange resins where necessary, verifying the status of the system for diffusing carbon dioxide and adding feed in the feed dispensers when it runs out.

At the end of all these operations, the production cycle can start all over again, according to the set software program.

As pointed out, through the control and management system it is possible to modify some or all phases of the process according to the present invention in order to adapt it to the type of species to be reared. If it is desired to rear a very delicate species, the control and management system will act directly on the pumping system in order to use a culture medium change procedure that respects the delicate nature of the species to be reared, for example by changing the water by means of a "dropwise" procedure. Similarly, the drip ring will be used to regulate flow during the change of the medium.

According to one embodiment of the present invention, the process comprises the action of varying the quantity and the arrangement of the tanks. As previously described for the apparatus, the modular system of the tanks ensures considerable flexibility in terms of the tank configuration and consequently the yield of the cultures. Furthermore, this flexibility offers a good optimisation of space, given that the tanks can be arranged according to different possible configurations.

According to a further embodiment of the present invention, the process comprises the action of simultaneously managing the development of a plurality of cultures differing from one another. In other words, the process comprises the action of simultaneously growing cultures that differ from one another from the standpoint, for example, of growth conditions. This can be achieved both by increasing the number of rearing tanks and increasing the number of containers inside each rearing tank.

As pointed out previously, the porous partitions are used for passive and active exchanges in the culture medium. The second porous partition, which is placed, for example, at the base of the container, preferably has a wider mesh size than the first porous partition, which is placed, for example, on the lateral surface of the container. The second porous partition can be closed off by an air bubble generated by an aerator which injects air in proximity to the surface thereof. In order to change the water, a pump acts upon the air bubble, sucking it in, and frees the passage through the porous partition. Once the change of the medium has concluded, a new air bubble is generated by means of the aerator and the second porous partition is closed off again. This water changing process is very efficient and at the same time safeguards the integrity of small, delicate aquatic species.

It is worth noting that the action of periodically changing the culture medium is adaptable to the type and thus needs of the culture. More specifically, the action of periodically changing the culture medium can be performed by pumping water into the rearing container and simultaneously extracting water from the rearing tank by means of two exchange pumps operating simultaneously. Alternatively, this can be performed by partially emptying the rearing tank by means of one pump and subsequently filling it with another one.

These and other aspects of the present invention will become clearer in light of the following description of several preferred embodiments disclosed hereinbelow.
Fig. 1 shows a schematic representation of the apparatus according to one embodiment of the present invention;
Fig. 2 shows a schematic representation of the apparatus according to another embodiment of the present invention, wherein a number of cultures can be grown simultaneously;
Figs. 3a and 3b show a representation of the storage tank viewed from the side (a) and from above (b) according to one embodiment of the present invention;
Figs. 4a and 4b show a representation of the filtering tank viewed from the side (a) and from above (b) according to one embodiment of the present invention;
Figs. 5a and 5b show a representation of the rearing tank viewed from the side (a) and from above (b) according to one embodiment of the present invention;
Figs. 6a, 6b and 6c show a representation of the rearing container viewed from the side (a), from above (b) and from below (c) according to one embodiment of the present invention; and
Figs. 7a, 7b and 7c schematically show the modular tank system according to some possible configurations.

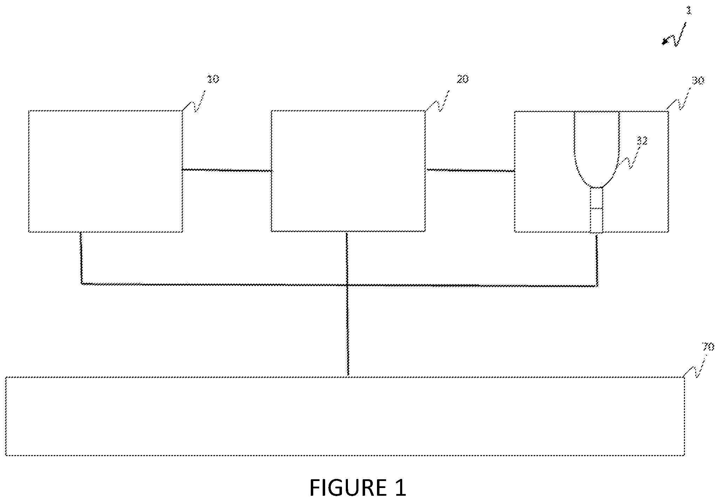

Figure 1 shows a schematic representation of the apparatus 1 for growing at least one culture of organisms in an aquatic environment. From the point of view of the modular tank system, the configuration in figure 1 represents the simplest one. The apparatus 1 comprises a storage tank 10, a filtering tank 20, connected to the storage tank 10 and suitable for receiving water from the storage tank 10 in order to treat the water so as to prepare the culture medium, and a rearing tank 30, connected to the filtering tank 20 and suitable for receiving the treated water from the filtering tank 20 and comprising at least one container 32 for growing the culture. In order to control the environmental conditions of growth of the culture and vary, or manage the culture medium automatically in response to variations in the environmental conditions of growth, the apparatus comprises a control and management system 70. This system 70 is connected directly to each of the tanks 10, 20, 30 so as to adapt the culture conditions to the very specific needs of the reared species.

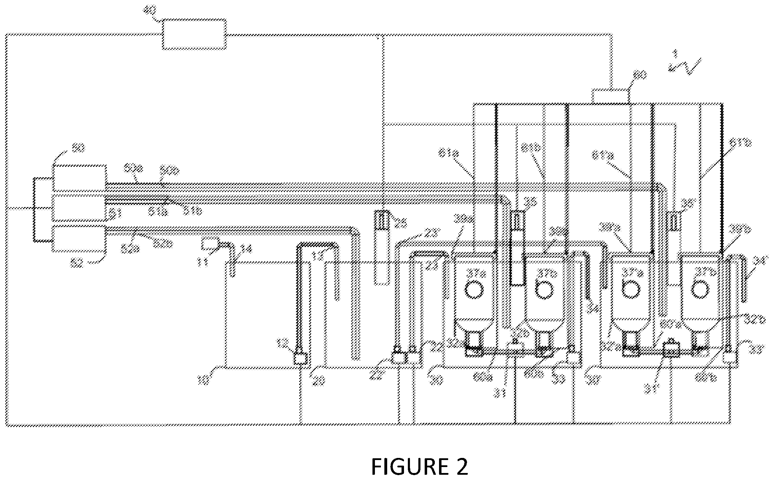

Figure 2 shows an apparatus 1 for the simultaneous management of 4 marine aquatic cultures. The apparatus comprises a total of four tanks: a storage tank 10 for continuously collecting not treated water from a saltwater source 11, a tank for the filtering and maturation of the culture medium 20 and two rearing tanks 30, 30'. For the sake of illustrative clarity, the tanks are arranged in a line. Every rearing tank 30, 30' comprises two culture cylinders 32a, 32b and 32'a, 32'b. By means of the conveyance pipe 13, the water passes from the storage tank 10 to the filtering tank 20 in order to be treated before being used for the periodic changes of the culture medium. From the filtering tank 20, after being filtered, thermoregulated and conditioned, the water is pumped and, by means of the conveyance pipes 23 and 23', transferred respectively to the rearing tanks 30 and 30'. Here an exchange of the culture medium takes place inside the cylinders 32a, 32b and 32'a, 32'b through the porous lateral partitions 37a, 37b and 37'a and 37'b. The excess water is pumped by means of the pumps of exchange 33 and 33' and transferred outside the rearing tanks 30 and 30' through the transfer pipes 34 and 34'.

The apparatus further comprises a control and management system for controlling the environmental conditions of growth of the culture and for automatically varying the culture medium in response to variations in said environmental conditions. In particular, the apparatus 1 comprises a computing and programming unit 40 directly connected to the devices for controlling and managing the culture medium. In the example shown in figure 1, the computing and programming unit 40 is connected to three filtering and temperature control systems 50, 51, 52, each associated with the filtering tank 20 and the two rearing tanks 30 and 30' by means of the pipes for thermoregulation 50a, 51a and 52a and for filtration 50b, 51b and 52b. The computing and programming unit 40 is further connected to a skimmer-contact column 25 positioned inside the filtering tank 20 and to two protein skimmers 35 and 35' in the two rearing tanks 30 and 30'. In order to control and manage the transfer of water from one tank to another, as well as the periodic exchanges of the culture medium in the rearing cylinders 32a, 32b and 32'a, 32'b, the computing and programming unit 40 is additionally connected to a pump 12 inside the storage tank 10, two pumps 22 and 22' inside the filtering tank 20, the exchange pumps 33 and 33' and the pumps 31 and 31' for eliminating the air bubble from the bottom of the rearing cylinders 32a, 32b, 32'a 32'b inside the rearing tanks 30 and 30'. Finally, the computing and programming unit 40 is connected to an aeration system 60 for managing the periodic change of the culture medium, connected by means of the pipes 60a, 60b and 60'a, 60'b to the bottom of the cylinders 32a, 32b and 32'a, 32'b and by means of the pipes 61a, 61b and 61'a, 61'b to the lids 39a, 39b and 39'a, 39'b of the cylinders 32a, 32b and 32'a, 32'b.

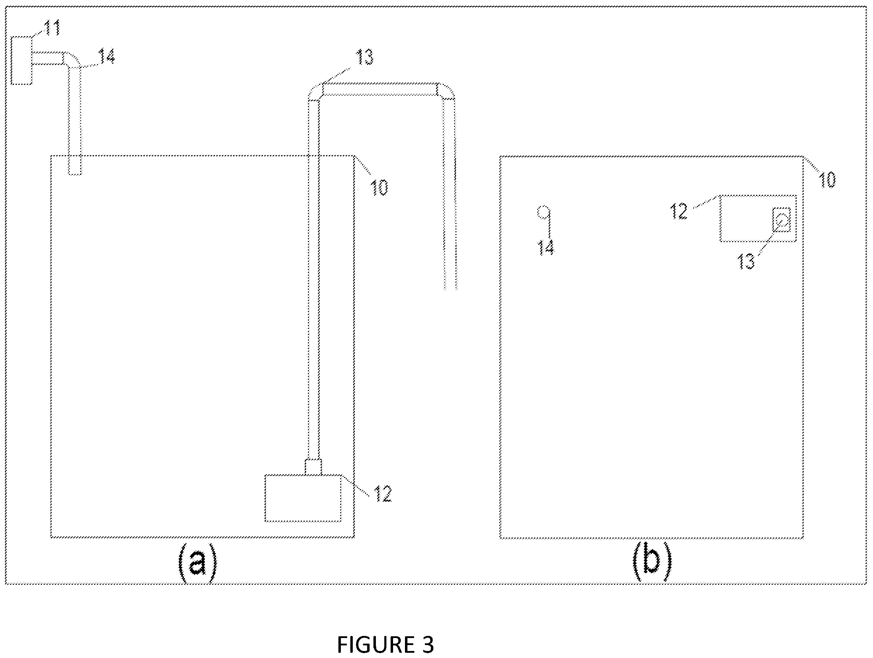

Figure 3 shows the storage tank 10 viewed from the side (a) and viewed from above (b) in detail. From the figure it may be understood that the storage tank 10 collects water from a source 11 via a pipe 14 and conveys it to the outside (into the filtering tank 20) by means of a pump 12 associated with a conveyance pipe 13.

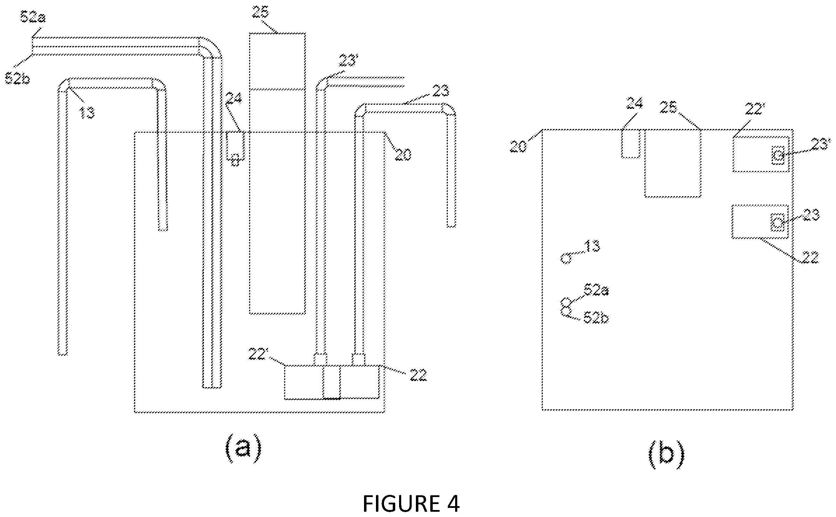

Figure 4 shows the filtering tank 20 viewed from the side (a) and viewed from above (b) in detail. From the figure it may be understood that the filtering tank 20 collects water from the storage tank 10 via the pipe 13 and conveys it outside (into the rearing tanks 30 and 30') by means of the pumps 22 and 22', each associated with a conveyance pipe 23 and 23'. The figure further shows the presence of the pipes for thermoregulation and filtering 52a and 52b originating from the thermoregulation and filtering system 52 managed and controlled by the computing and programming unit 40. Also present are a skimmer-contact column 25 and a float 24, which acts as a level sensor. As in the case of the skimmer 25, which also serves as a contact column for the distribution of ozone, the float 24 is controlled and managed by the computing and programming unit 40 via a direct connection (not shown in the figure).

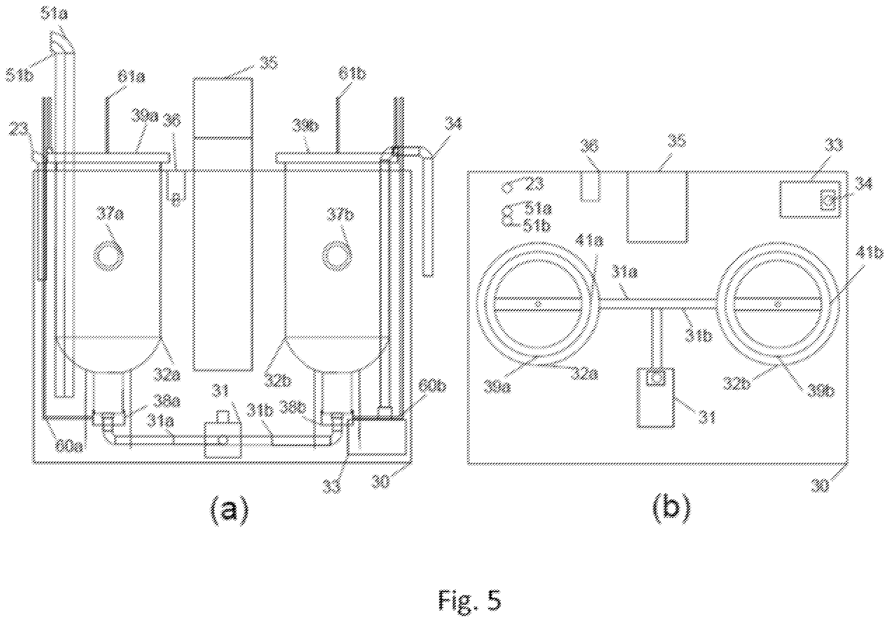

Figure 5 shows one of the rearing tanks 30 viewed from the side (a) and viewed from above (b) in detail. From the figure it may be understood that the rearing tank 30 collects water from the filtering tank 20 via the pipe 23 and conveys it outside by means of the exchange pump 33 associated with a conveyance pipe 34. Figure 5 further shows the presence of the thermoregulation and filtering pipes 51a and 51b originating from the thermoregulation and filtering system 51 managed and controlled by the computing and programming unit 40. Furthermore, there is a protein skimmer 35 and a float 36 which acts as a level sensor. In this case as well, the skimmer 35 and the float 36 are controlled and managed by the computing and programming unit 40 via a direct connection (not shown in the figure). The rearing tank 30 comprises two containers 32a and 32b for rearing two cultures simultaneously. Every container comprises a lateral porous partition 37a and 37b and one on the bottom 38a and 38b for managing the exchange of the medium inside the rearing cylinder 32a and 32b. In order to permit the exchange of the medium and open a conduit between the base of the cylinders 32a and 32b and the rearing tank 30, the centrifugal pump 31 is activated by the computing and programming unit 40 so as to suck in (via the pipes 31a and 31b) and hence eliminate an air bubble which adheres to the partition 38a and 38b, physically closing off the membrane of the partition 38a and 38b. Simultaneously, the aeration system 60 interrupts the production of air bubbles via the conduits 60a and 60b. Then follows a partial emptying of the outer tank, so as to promote a discharge of organic debris through the bottom. Alternatively, the drip lid can be put into operation to produce a net but more delicate flow through the bottom, from above to below. During these operations it is possible to keep the reared organisms away from the bottom membrane, if they are phototactic, by using a source of light coming from above. In every case it is possible to provide for an interruption in the air flow via the aerator at the base of the cylinder in order to favour gravimetric settling of the suspended elements. Once the exchange of the culture medium inside the cylinders 32a and 32b has ended, the centrifugal pump 31 stops suctioning and a new air bubble is produced on the membrane of the porous partitions 38a and 38b at the base of the cylinders 32a and 32b via the aeration system 60. The aeration system is also connected to the lids 39a and 39b of the cylinders 32a and 32b by means of the pipes 61a and 61b. The lids 39a and 39b are made up of drip rings 41a and 41b for regulating flow during the change of the culture medium and for managing the changes of water, therefore, under different conditions of use, adapting the flow above all for very delicate species.

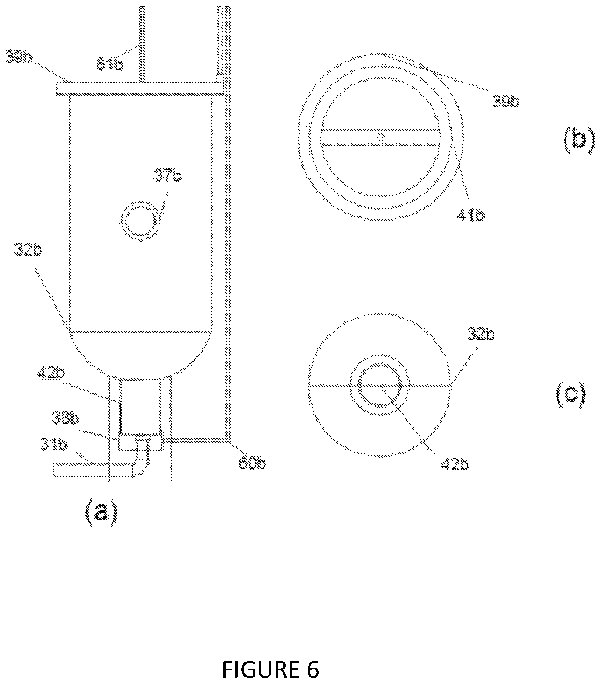

Figure 6 shows, in detail, the structure of a container or cylinder 32b for growing the culture as viewed from the side (a), from above (b) and from below (c). In particular, figure 6 shows how the lateral partition 37b for passive ion exchanges is set essentially halfway up the structure of the container 32b. Furthermore, the lower part of the container 32b is characterised by a smaller cylinder 42b, in which the product residues are collected at the end of the process of development.

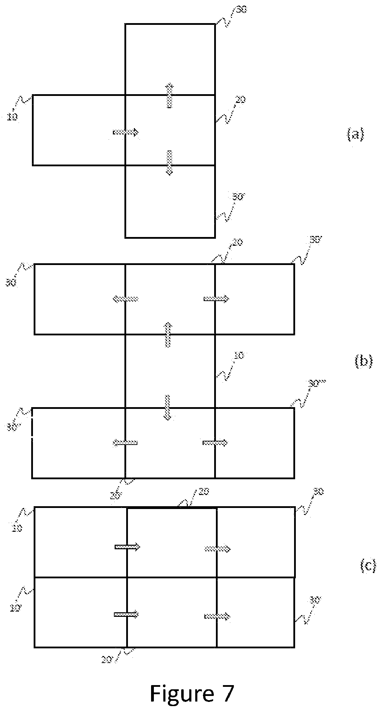

Figure 7, finally, shows some possible configurations of the modular tank system according to the present invention. For the sake of illustrative clarity, neither the control and management devices nor the computing and programming unit 40 are shown in the examples provided. Figure 7a shows a configuration comprising a storage tank 10, a filtering tank 20 and two rearing tanks 30 and 30', as described in figures 2-6. With the aim of optimising spaces and exploiting their modular property, the two rearing tanks 30 and 30' can be positioned on either side of the filtering tank 20 so as to form a T-shaped configuration. This also makes it possible to optimise the use of some devices such as lamps, which can in principle be shared by a number of tanks. In the figure the direction of transfer of water from one tank to another is also schematically shown with arrows.

Figure 7b, on the other hand, shows an example in which four rearing tanks 30, 30', 30" and 30''' are used simultaneously, starting from a single storage tank 10. As discussed previously, a dedicated filtering tank 20 and 20' is necessary for every pair of rearing tanks 30, 30 and 30" and 30"'. The rearing tanks 30, 30', 30" and 30"' and filtering tanks 20 and 20' can be arranged in two rows with a storage tank 10 connected to a water source in the middle. In this case as well, the arrows indicate the direction of transfer of the water from one tank to another.

Figure 7c shows, finally, an example in which the development of two cultures is managed simultaneously within two different aquatic environments. In this case, the tanks can be arranged in two rows, where a culture medium in a marine environment is prepared in one row (top row) whilst a culture medium in a freshwater environment is prepared in the other (bottom row). As in the two previous cases, the arrows indicate the direction of transfer of the water from one tank to another.

It is clear that any other type of combination among these different configurations (a), (b) and (c) is possible.

The person skilled in the art may introduce numerous further modifications and variants to the apparatus and process described above in order to satisfy further contingent needs, all of which falling, however, within the scope of protection of the present invention as defined in the appended claims.

## Claims

1. An apparatus (1) for growing at least one culture of organisms in an aquatic environment, comprising:
- at least one storage tank (10) for continuously collecting not treated water;
- at least one filtering tank (20, 20'), connected to the storage tank (10) and suitable for receiving water from the storage tank (10) for the treatment thereof to obtain a culture medium;
- at least one rearing tank (30, 30', 30", 30'''), connected to the filtering tank (20, 20') and comprising at least one rearing container (32), said rearing tank (30, 30', 30", 30''') and said container (32) being suitable for receiving the culture medium from the filtering tank (20, 20') and
- at least one control and management system (70) for controlling the environmental conditions of growth of the culture and for automatically varying the culture medium in response to variations in said environmental conditions of growth,
**characterised in that**
the rearing container (32) comprises at least a first porous partition (37a, 37b, 37'a, 37'b) for passive ion exchanges of the culture medium between the inside and the outside of the container (32), said passive ion exchanges being obtained by diffusion, and at least a second porous partition (38a, 38b, 38'a, 38'b) for active exchanges of the culture medium, said active exchanges being obtained by generating a pressure variation between the inside and the outside of the rearing container (32).

2. The apparatus according to claim 1, wherein the storage tank (10), the filtering tank (20, 20') and the rearing tank (30, 30', 30", 30''') make up a modular tank system suitable for varying the number and arrangement of tanks connected to one another.

3. The apparatus according to one of the preceding claims, wherein the rearing tank (30, 30', 30", 30''') comprises a plurality of rearing containers (32a, 32b, 32'a, 32'b).

4. The apparatus according to claim 3, wherein said rearing containers (32a, 32b, 32'a, 32'b) comprise a means of rapid engagement to and disengagement from the rearing tank.

5. The apparatus according to one of the preceding claims, wherein the first porous partition (37a, 37b, 37'a, 37'b) is positioned on a lateral surface of the rearing container (32a, 32b, 32'a, 32'b) and the second porous partition (38a, 38b, 38'a, 38'b) is positioned on a surface located on the bottom of the rearing container (32a, 32b, 32'a, 32'b).

6. The apparatus according to claim 5, wherein the lateral surface has a substantially vertical orientation relative to a base surface of the rearing tank (30, 30', 30", 30''') and the surface located on the bottom has a substantially horizontal orientation relative to said base surface.

7. The apparatus according to one of the preceding claims, wherein the second porous partition (38a, 38b, 38'a, 38'b) is closed off by an air bubble.

8. The apparatus according to one of the preceding claims, wherein the rearing container (32a, 32b, 32'a, 32'b) comprises, in the upper part thereof, a ring-shaped element (41a, 41b, 41'a, 41'b) for permitting water to drip along the walls of the rearing container (32a, 32b, 32'a, 32'b) and regulating the flow thereof.

9. The apparatus according to one of the preceding claims, wherein the control and management system comprises sensing devices (24, 36) and management devices (12, 22, 22' 25, 31, 31', 33, 33', 35, 35', 50, 51, 52, 60), connected to each of the tanks (10, 20, 20', 30, 30', 30'', 30''') and at least one computing and programming unit (40) connected to the individual sensing devices (24, 36) and to the individual management devices (12, 22, 22' 25, 31, 31', 33, 33', 35, 35', 50, 51, 52, 60) so as to automatically adapt the environmental culture conditions to the type of culture to be reared.

10. The apparatus according to one of the preceding claims, wherein the control and management system comprises a pumping system (31, 31', 33, 33') for changing the culture medium inside the rearing container (32a, 32b, 32'a, 32'b).

11. A process for growing at least one culture of organisms in an aquatic environment, comprising the actions of:
- supplying at least one storage tank (10) with not treated water;
- connecting at least one filtering tank (20, 20') to the storage tank (10) in such a way that the filtering tank (20, 20') receives water from the storage tank (10) and prepares a culture medium inside the filtering tank (20, 20') by treating the water;
- connecting at least one rearing tank (30, 30', 30", 30''') comprising at least one container (32) for rearing the culture to the filtering tank (20, 20') in such a way that the rearing tank (30, 30', 30", 30''') and the container (32) receive the culture medium from the filtering tank (20, 20'), and
- controlling the environmental conditions of growth of the culture and automatically varying the culture medium in response to variations in said environmental conditions of growth via a control and management system
**characterised in that**
- the culture medium inside the rearing container (32) is periodically and automatically changed using at least a first porous partition (37a, 37b, 37'a, 37'b) for passive ion exchanges of the culture medium between the inside and the outside of the container(32), said passive ion exchanges being obtained by diffusion, and at least a second porous partition (38a, 38b, 38'a, 38'b) for active exchanges of the culture medium, said active exchanges being obtained by generating a pressure variation between the inside and the outside of the rearing container (32), wherein the action of periodically and automatically changing the culture medium is adaptable to the type of the culture to be reared.

12. The process according to claim 11, further comprising the action of varying the quantity and arrangement of the tanks (10, 20, 20', 30, 30', 30", 30''').

13. The process according to one of the preceding claims, further comprising the action of simultaneously managing the development of a plurality of cultures that differ from one another.

14. The process according to claim 11, wherein the action of periodically and automatically changing the culture medium is performed by pumping water into the rearing container (32a, 32b, 32'a, 32'b) and simultaneously extracting water from the rearing tank (30, 30', 30", 30''') by means of an exchange pump (33, 33').

15. The process according to claim 11, wherein the action of periodically and automatically changing the culture medium is performed by partially emptying the rearing tank (30, 30', 30", 30''') and subsequently filling it.

## Patentansprüche

1. Vorrichtung (1) zum Züchten von mindestens einer Kultur von Organismen in einer aquatischen Umgebung, umfassend:
- mindestens einen Lagertank (10) zum kontinuierlichen Sammeln von unbehandeltem Wasser;
- mindestens einen Filtertank (20, 20'), der mit dem Lagerbehälter (10) verbunden und für den Erhalt von Wasser aus dem Lagerbehälter (10) zur Behandlung dessen geeignet ist, um ein Kulturmedium zu erhalten;
- mindestens einen Zuchttank (30, 30', 30", 30'''), der mit dem Filtertank (20, 20') verbunden ist, und der mindestens einen Zuchtbehälter (32) umfasst, wobei der Zuchttank (30, 30', 30", 30''') und der Behälter (32) für den Erhalt des Kulturmediums aus dem Filtertank (20, 20') geeignet sind, und
- mindestens ein Steuerungs- und Verwaltungssystem (70) zur Steuerung der Umgebungsbedingungen des Wachstums der Kultur, und zur automatischen Änderung des Kulturmediums als Reaktion auf Veränderungen der Umgebungsbedingungen des Wachstums,
**dadurch gekennzeichnet, dass**
der Zuchtbehälter (32) mindestens eine erste poröse Trennwand (37a, 37b, 37'a, 37'b) für passive Ionenaustausche des Kulturmediums zwischen der Innenseite und der Außenseite des Behälters (32) umfasst, wobei die passiven Ionenaustausche durch Diffusion erhalten werden, und mindestens eine zweite poröse Trennwand (38a, 38b, 38'a, 38'b) für aktive Austausche des Kulturmediums, wobei die aktiven Austausche durch die Erzeugung einer Druckänderung zwischen der Innenseite und der Außenseite des Zuchtbehälters (32) erhalten werden.

2. Vorrichtung nach Anspruch 1, wobei der Lagertank (10), der Filtertank (20, 20') und der Zuchttank (30, 30', 30", 30''') ein modulares Tanksystem bilden, das sich für die Änderung der Anzahl und Anordnung von Tanks, die miteinander verbunden sind eignet.

3. Vorrichtung nach einem der vorhergehenden Ansprüche, wobei der Zuchttank (30, 30', 30", 30''') mehrere Zuchtbehälter (32a, 32b, 32'a, 32'b) umfasst.

4. Vorrichtung nach Anspruch 3, wobei die Zuchtbehälter (32a, 32b, 32'a, 32'b) Mittel zum schnellen Verbinden mit und Lösen von dem Zuchttank umfassen.

5. Vorrichtung nach einem der vorhergehenden Ansprüche, wobei die erste poröse Trennwand (37a, 37b, 37'a, 37'b) an einer seitlichen Oberfläche des Zuchtbehälters (32a, 32b, 32'a, 32'b) angeordnet ist, und wobei die zweite poröse Trennwand (38a, 38b, 38'a, 38'b) an einer Oberfläche angeordnet ist, die sich am Boden des Zuchtbehälters (32a, 32b, 32'a, 32'b) befindet.

6. Vorrichtung nach Anspruch 5, wobei die seitliche Oberfläche eine im Wesentlichen vertikale Ausrichtung in Bezug auf eine Grundfläche des Zuchttanks (30, 30', 30", 30''') aufweist, und wobei die Oberfläche, die am Boden angeordnet ist eine im Wesentlichen horizontale Ausrichtung in Bezug auf die Grundfläche aufweist.

7. Vorrichtung nach einem der vorhergehenden Ansprüche, wobei die zweite poröse Trennwand (38a, 38b, 38'a, 38'b) durch eine Luftblase verschlossen ist.

8. Vorrichtung nach einem der vorhergehenden Ansprüche, wobei der Zuchtbehälter (32a, 32b, 32'a, 32'b) im oberen Teil davon ein ringförmiges Element (41a, 41b, 41'a, 41'b) umfasst, um zu ermöglichen, dass Wasser entlang der Wände des Zuchtbehälters (32a, 32b, 32'a, 32'b) tropft und den Fluss davon zu regulieren.

9. Vorrichtung nach einem der vorhergehenden Ansprüche, wobei das Steuerungs- und Verwaltungssystem Abtastvorrichtungen (24, 36) und Verwaltungsvorrichtungen (12, 22, 22' 25, 31, 31', 33, 33', 35, 35', 50, 51, 52, 60), die mit jedem der Tanks (10, 20, 20', 30, 30', 30", 30''') verbunden sind, und mindestens eine Rechen- und Programmiereinheit (40), die mit den einzelnen Abtastvorrichtungen (24, 36) und mit den einzelnen Verwaltungsvorrichtungen (12, 22, 22' 25, 31, 31', 33, 33', 35, 35', 50, 51, 52, 60) verbunden ist umfasst, um die Umgebungsbedingungen der Kultur automatisch an die Art der zu züchtenden Kultur anzupassen.

10. Vorrichtung nach einem der vorhergehenden Ansprüche, wobei das Steuerungs- und Verwaltungssystem ein Pumpsystem (31, 31', 33, 33') zum Ändern des Kulturmediums in dem Zuchtbehälter (32a, 32b, 32'a, 32'b) umfasst.

11. Verfahren zum Züchten von mindestens einer Kultur von Organismen in einer aquatischen Umgebung, umfassend die Vorgänge des:
- Bereitstellens von mindestens einem Lagertank (10) mit unbehandeltem Wasser;
- Verbindens von mindestens einem Filtertank (20, 20') mit dem Lagertank (10) derart, dass der Filtertank (20, 20') Wasser aus dem Lagertank (10) erhält und ein Kulturmedium in dem Filtertank (20, 20') herstellt, indem das Wasser behandelt wird;
- Verbindens von mindestens einem Zuchttank (30, 30', 30", 30'''), umfassend mindestens einen Behälter (32) zur Aufzucht der Kultur mit dem Filtertank (20, 20') derart, dass der Zuchttank (30, 30', 30", 30''') und der Behälter (32) das Kulturmedium von dem Filtertank (20, 20') erhalten, und
- Steuerns der Umgebungsbedingungen des Wachstums der Kultur und des automatischen Änderns des Kulturmediums als Reaktion auf Veränderungen der Umgebungsbedingungen des Wachstums über ein Steuerungs- und Verwaltungssystem,
**dadurch gekennzeichnet, dass**
- das Kulturmedium in dem Zuchtbehälter (32) periodisch und automatisch unter Verwendung von mindestens einer ersten Trennwand (37a, 37b, 37'a, 37'b) für passive Ionenaustausche des Kulturmediums zwischen der Innenseite und der Außenseite des Behälters (32), wobei die passiven Ionenaustausche durch Diffusion erhalten werden, und mindestens einer zweiten porösen Trennwand (38a, 38b, 38'a, 38'b) für aktive Austausche des Kulturmediums, wobei die aktiven Austausche durch die Erzeugung einer Druckänderung zwischen der Innenseite und der Außenseite des Zuchtbehälters (32) erhalten werden, geändert wird, wobei der Vorgang der periodischen und automatischen Änderung des Kulturmediums an die Art der zu züchtenden Kultur anpassbar ist.

12. Verfahren nach Anspruch 11, weiterhin umfassend den Vorgang des Änderns der Quantität und Anordnung der Tanks (10, 20, 20', 30, 30', 30", 30''').

13. Verfahren nach einem der vorhergehenden Ansprüche, weiterhin umfassend den Vorgang des gleichzeitigen Verwaltens der Entwicklung mehrerer Kulturen, die sich voneinander unterscheiden.

14. Verfahren nach Anspruch 11, wobei der Vorgang des periodischen und automatischen Änderns des Kulturmediums durch das Pumpen von Wasser in den Zuchtbehälter (32a, 32b, 32'a, 32'b) und das gleichzeitige Entfernen von Wasser aus dem Zuchttank (30, 30', 30", 30''') mittels einer Austauschpumpe (33, 33') durchgeführt wird.

15. Verfahren nach Anspruch 11, wobei der Vorgang des periodischen und automatischen Änderns des Kulturmediums durch das teilweise Leeren des Zuchttanks (30, 30', 30", 30''') und das anschließende Füllen davon durchgeführt wird.

## Revendications

1. Appareil (1) pour la croissance d'au moins une culture d'organismes dans un environnement aquatique, comprenant :
- au moins un réservoir de stockage (10) permettant de recueillir en continu de l'eau non traitée ;
- au moins un réservoir de filtrage (20, 20'), raccordé au réservoir de stockage (10) et conçu pour recevoir de l'eau du réservoir de stockage (10) pour le traitement de celle-ci afin d'obtenir un milieu de culture ;
- au moins un réservoir d'élevage (30, 30', 30", 30'''), raccordé au réservoir de filtrage (20, 20') et comprenant au moins un récipient d'élevage (32), ledit réservoir d'élevage (30, 30', 30", 30''') et ledit récipient (32) étant conçus pour recevoir le milieu de culture du réservoir de filtrage (20, 20') et
- au moins un système de régulation et de gestion (70) permettant de réguler les conditions environnementales de croissance de la culture et de faire varier automatiquement le milieu de culture en réponse à des variations desdites conditions environnementales de croissance,
**caractérisé en ce que**
le récipient d'élevage (32) comprend au moins une première séparation poreuse (37a, 37b, 37'a, 37'b) pour les échanges d'ions passifs du milieu de culture entre l'intérieur et l'extérieur du récipient (32), lesdits échanges d'ions passifs étant obtenus par diffusion, et au moins une deuxième séparation poreuse (38a, 38b, 38'a, 38'b) pour les échanges actifs du milieu de culture, lesdits échanges actifs étant obtenus par génération d'une variation de pression entre l'intérieur et l'extérieur du récipient d'élevage (32).

2. Appareil selon la revendication 1, dans lequel le réservoir de stockage (10), le réservoir de filtrage (20, 20') et le réservoir d'élevage (30, 30', 30", 30''') constituent un système de réservoirs modulaire conçu pour faire varier le nombre et l'agencement de réservoirs raccordés les uns aux autres.

3. Appareil selon l'une des revendications précédentes, dans lequel le réservoir d'élevage (30, 30', 30", 30''') comprend une pluralité de récipients d'élevage (32a, 32b, 32'a, 32'b).

4. Appareil selon la revendication 3, dans lequel lesdits récipients d'élevage (32a, 32b, 32'a, 32'b) comprennent un moyen pour rapidement se mettre en prise avec et se désengager du réservoir d'élevage.

5. Appareil selon l'une des revendications précédentes, dans lequel la première séparation poreuse (37a, 37b, 37'a, 37'b) est positionnée sur une surface latérale du récipient d'élevage (32a, 32b, 32'a, 32'b) et la seconde séparation poreuse (38a, 38b, 38'a, 38'b) est positionnée sur une surface située sur le fond du récipient d'élevage (32a, 32b, 32'a, 32'b).

6. Appareil selon la revendication 5, dans lequel la surface latérale a une orientation sensiblement verticale relativement à une surface de base du réservoir d'élevage (30, 30', 30", 30''') et la surface située sur le fond a une orientation sensiblement horizontale relativement à ladite surface de base.

7. Appareil selon l'une des revendications précédentes, dans lequel la deuxième séparation poreuse (38a, 38b, 38'a, 38'b) est fermée par une bulle d'air.

8. Appareil selon l'une des revendications précédentes, dans lequel le récipient d'élevage (32a, 32b, 32'a, 32'b) comprend, dans sa partie supérieure, un élément de forme annulaire (41a, 41b, 41'a, 41'b) pour permettre à l'eau de couler goutte à goutte le long des parois du récipient d'élevage (32a, 32b, 32'a, 32'b) et pour réguler son écoulement.

9. Appareil selon l'une des revendications précédentes, dans lequel le système de régulation et de gestion comprend des dispositifs de détection (24, 36) et des dispositifs de gestion (12, 22, 22', 25, 31, 31', 33, 33', 35, 35', 50, 51, 52, 60), raccordés à chacun des réservoirs (10, 20, 20', 30, 30', 30", 30''') et au moins une unité de calcul et de programmation (40) raccordée aux dispositifs de détection individuels (24, 36) et aux dispositifs de gestion individuels (12, 22, 22', 25, 31, 31', 33, 33', 35, 35', 50, 51, 52, 60) afin d'adapter automatiquement les conditions environnementales de culture au type de culture à élever.

10. Appareil selon l'une des revendications précédentes, dans lequel le système de régulation et de gestion comprend un système de pompage (31, 31', 33, 33') pour modifier le milieu de culture à l'intérieur du récipient d'élevage (32a, 32b, 32'a, 32'b).

11. Procédé de croissance d'au moins une culture d'organismes dans un environnement aquatique, comprenant les actions suivantes :
- fournir à au moins un récipient de stockage (10) de l'eau non traitée ;
- raccorder au moins un récipient de filtrage (20, 20') au réservoir de stockage (10) de telle manière que le réservoir de filtrage (20, 20') reçoit de l'eau du réservoir de stockage (10) et prépare un milieu de culture à l'intérieur du réservoir de filtrage (20, 20') par traitement de l'eau ;
- raccorder au moins un réservoir d'élevage (30, 30', 30", 30"') comprenant au moins un récipient (32) pour élever la culture au réservoir de filtration (20, 20') de telle manière que le réservoir d'élevage (30, 30', 30", 30"') et le récipient (32) reçoivent le milieu de culture du réservoir de filtrage (20, 20'), et
- réguler les conditions environnementales de croissance de la culture et automatiquement faire varier le milieu de culture en réponse aux variations desdites conditions environnementales de croissance via un système de régulation et de gestion
**caractérisé en ce que**
- le milieu de culture à l'intérieur du récipient d'élevage (32) est périodiquement et automatiquement modifié en utilisant au moins une première séparation poreuse (37a, 37b, 31'a, 37'b) pour les échanges d'ions passifs du milieu de culture entre l'intérieur et l'extérieur du récipient (32), lesdits échanges d'ions passifs étant obtenus par diffusion, et au moins une deuxième séparation poreuse (38a, 38b, 38'a, 38'b) pour les échanges actifs du milieu de culture, lesdits échanges actifs étant obtenus par génération d'une variation de pression entre l'intérieur et l'extérieur du récipient d'élevage (32), dans lequel l'action d'échange périodique et automatique du milieu de culture est adaptable au type de culture à élever.

12. Procédé selon la revendication 11, comprenant en outre l'action consistant à faire varier la quantité et l'agencement des réservoirs (10, 20, 20', 30, 30', 30", 30"').

13. Procédé selon l'une des revendications précédentes, comprenant en outre l'action consistant à simultanément gérer le développement d'une pluralité de cultures qui sont différentes les unes des autres.

14. Procédé selon la revendication 11, dans lequel l'action consistant à changer périodiquement et automatiquement le milieu de culture est réalisée par pompage d'eau dans le récipient d'élevage (32a, 32b, 32'a, 32'b) et par extraction simultanée de l'eau du réservoir d'élevage (30, 30', 30", 30''') au moyen d'une pompe d'échange (33, 33').

15. Procédé selon la revendication 11, dans lequel l'action consistant à changer périodiquement et automatiquement le milieu de culture est réalisée par vidage partiel du réservoir d'élevage (30, 30', 30", 30''') puis ensuite par son remplissage.
